# EUROPEAN PATENT APPLICATION

(11) **EP 3 081 537 A1**
(43) Date of publication of application: **19.10.2016**
(21) Application number: 14869985.3
(22) Date of filing: 09.12.2014
(51) Int. Cl.: C02F 1/469, B01D 35/06

(54) **DEVICE FOR TREATING WATER BY CDI METHOD**

(30) Priority: 10.12.2013 KR 20130153155
(71) Applicant: Coway Co., Ltd., Gongju-si, Chungcheongnam-do 314-895 (KR)
(72) Inventor: SON, Tae Yong, Seoul 151-919 (KR); LEE, Soo Young, Seoul 151-919 (KR); KWON, Tae Seong, Seoul 151-919 (KR); MOON, Hyoung Min, Seoul 151-919 (KR)
(74) Representative: Beck Greener
(86) International application number: PCT/KR2014/012058
(87) International publication number: WO 2015/088219

(57) **Abstract**

A device for treating water by CDI method according to the present invention comprises a filter unit including first and second filter parts having a water-purifying mode of discharging purified water by purifying raw water and a regeneration mode of regenerating an electrode according to the CDI method; and a control unit for controlling the filter unit, wherein if any one of the first and second filter parts performs the water-purifying mode for a first time, the other one performs the regeneration mode for a second time, and the control unit determines the first time or the second time on the basis of the water-purifying performance of the first filter part and the second filter part.

## Description

### Technical Field

The present invention relates to a device for treating water by a CDI method, more specifically to a device for treating water by a CDI method capable of actively controlling a water-purifying performance of a filter part to be mostly constant based on an evaluation on the water-purifying performance of the filter part.

### Background Art

Currently, a variety of devices for treating water such as water purifiers which treat raw water to generate purified water are disclosed. Recently, however, devices for treating water by an electro deionization (EDI) method such as electro deionization (EDI), continuous electro deionization (CEDI) and capacitive deionization (CDI) take center stage. Among them, the most favoured one is a device for treating water by a CDI method.

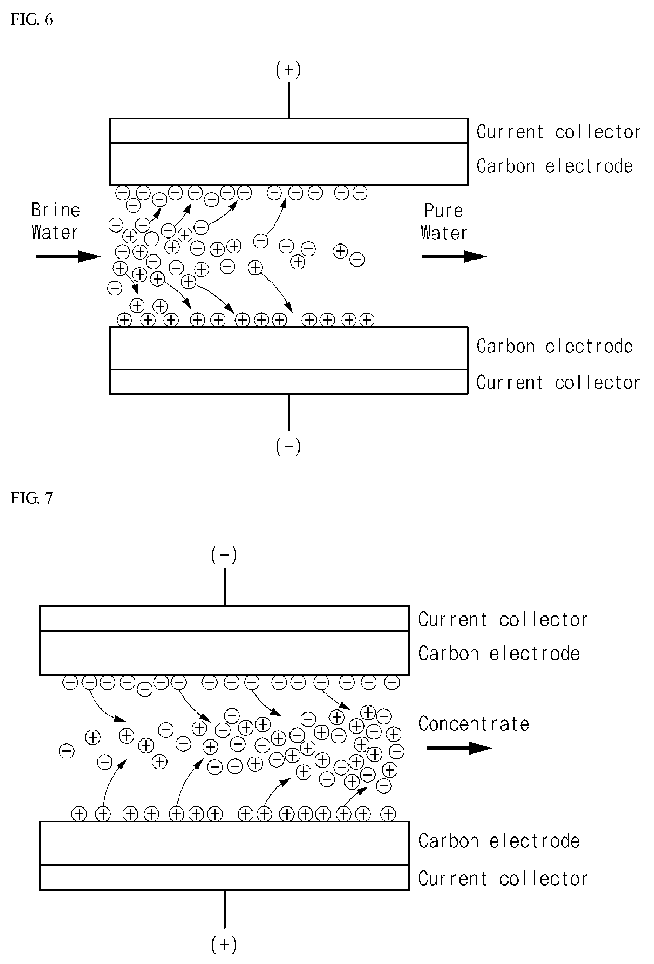

The CDI method refers to a method of removing an ion (a contaminant) using a principle of adsorbing and desorbing ion at a surface of an electrode by an electrical force. This will be further described with reference to Figs. 6 and 7. When passing raw water including an ion between the electrodes with power supplied to the electrode, an anion moves to anode and a cation moves to cathode, as illustrated in Fig. 6. In other words, adsorption occurs. By means of the adsorption, the ion included in the raw water may be removed. Meanwhile, when the adsorption continues, the electrode cannot adsorb the ion any longer. Even in this case, as illustrated in Fig. 7, it is necessary to desorb the ions adsorbed in the electrode to regenerate the electrode. (In this case, regeneration water is generated and discharged.) To this end, a voltage with an opposite polarity of purified water may be applied.

However, when the water-purifying performance of the filter part is decreased as the device for treating water by a CDI method is used, there is a concern that purified water of a certain level or below may be provided to a user. Additionally, when a device for treating water is installed in an area where quality of raw water is lower than expected or quality of raw water becomes low during the use of a device for treating water, there is a concern that purified water of a certain level or below may be provided to a user. Thus, in such case, it is urgently required to develop a technology capable of continuously providing to a user purified water within a certain level range.

### Detailed Description of the Invention

### Technical Task

The present invention is to solve the above-mentioned problems. The task of the present invention is to provide a device for treating water by a CDI method capable of actively controlling a water-purifying performance of a filter part to be mostly constant based on an evaluation on the water-purifying performance of the filter part.

### Technical Means for Achieving the Technical Task

The device for treating water by the CDI method according to the present invention includes filter unit including first and second filter parts having a water-purifying mode of discharging purified water by purifying raw water and a regeneration mode of regenerating an electrode according to the CDI method; and a control unit for controlling the filter unit. Here, if any one of the first and second filter parts performs the water-purifying mode for a first time, the other one performs the regeneration mode for a second time. In addition, the control unit determines the first time or the second time on the basis of the water-purifying performance of the first filter part and/or the second filter part.

### Advantageous Effects

The device for treating water by the CDI method according to the present invention determines an operation time of the water-purifying mode or an operation time of the regeneration mode based on the water-purifying performance of at least one of the first and second filter parts, thereby actively controlling the water-purifying performance of the filter part to be mostly constant.

### Brief Description of Drawings

Fig. 1 is a perspective view illustrating a filter unit according to an embodiment of the present invention;
Fig. 2 is an exploded perspective view illustrating the filter unit of Fig. 1;
Fig. 3 is an exploded perspective view illustrating a filter part and a terminal part of the filter unit of Fig. 1;
Fig. 4 is a cross-sectional view taken along line A-A of the filter unit of Fig. 1;
Fig. 5 is a schematic view schematically illustrating the device for treating water according to an embodiment of the present invention;
Fig. 6 is a conceptual diagram explaining a principle of achieving purified water in a CDI method; and
Fig. 7 is a conceptual diagram explaining a principle of achieving regeneration in the CDI method.

### Best Mode for Carrying out the Invention

Hereinafter, preferable embodiments of the present invention will be explained in detail with reference to the drawings attached. However, the present invention is not limited or restricted by the embodiments below.

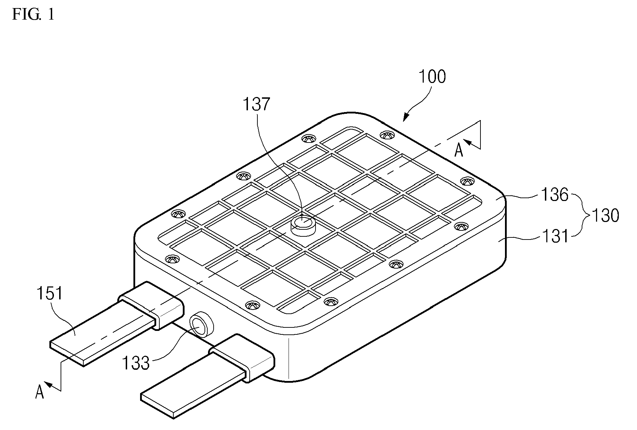

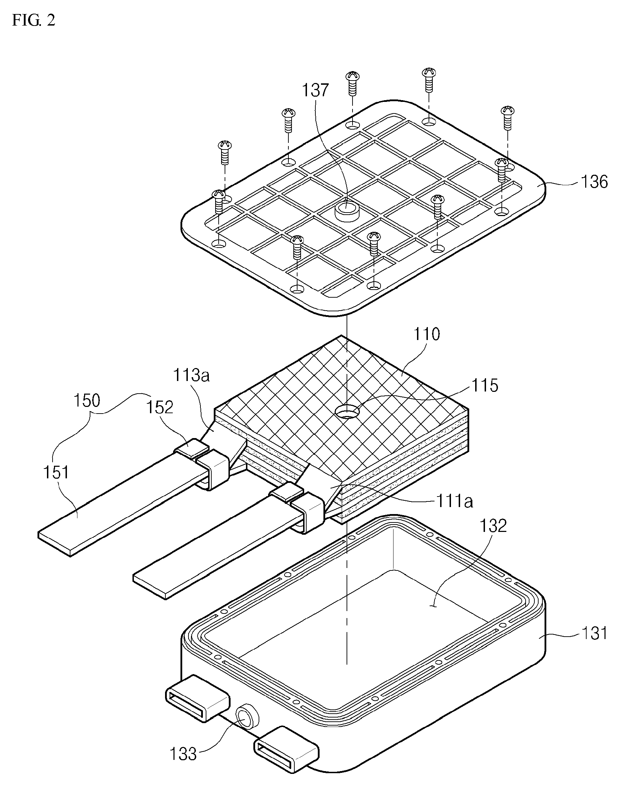

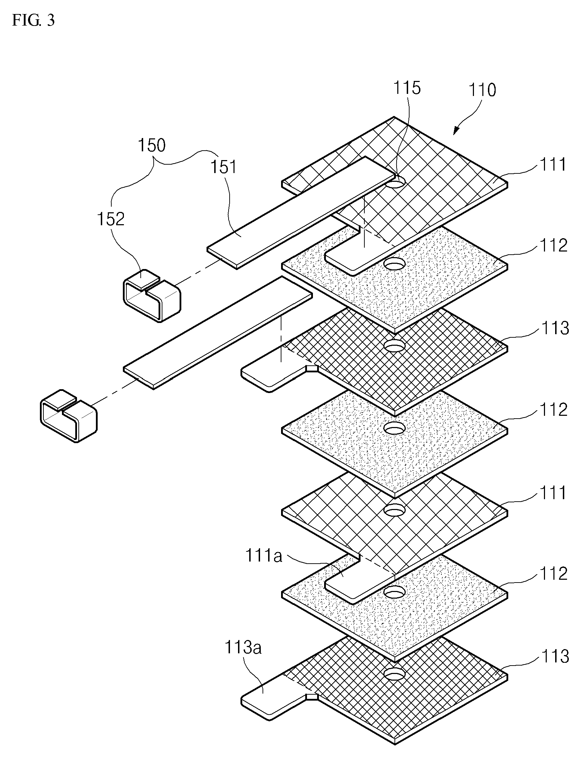

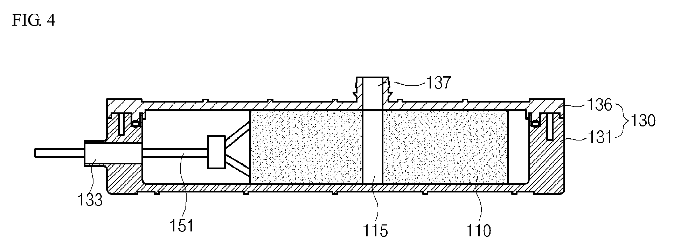

The method for treating water according to an embodiment of the present invention relates to a device for treating water by a CDI method, which basically includes a filter unit 100 and a control unit (not illustrated) controlling the filter unit 100. Hereinafter, the filter unit 100 will be first described with reference to Figs. 1 to 4. Here, Fig. 1 is a perspective view illustrating a filter unit according to an embodiment of the present invention, Fig. 2 is an exploded perspective view illustrating the filter unit of Fig. 1, Fig. 3 is an exploded perspective view illustrating a filter part and a terminal part of the filter unit of Fig. 1, and Fig. 4 is a cross-sectional view taken along line A-A of the filter unit of Fig. 1. For reference, the filter unit 100 in the present embodiment includes two filter parts. For the sake of convenience, however, Fig. 1 only illustrates a filter unit including one filter part.

### [Filter unit]

The filter unit 100 includes a filter part 110, a filter case part 130 and a terminal part 150 (here, the filter part consists of a first filter part and a second filter part, which will be described later). First of all, the filter part 110 will be described. The filter part 110 plays a role of purifying raw water by the CDI method. More specifically, as illustrated in Fig. 3, the filter part 110 is formed having electrodes 111 and 113 and a separator 112 alternately stacked. In this case, the electrodes include anode 111 and cathode 113. In other words, the filter part 110 is formed having the anode 111 and the cathode 113 oppositely stacked through the separator 112.

In general, however, the electrodes 111 and 113 may be formed by coating an activated carbon on both sides of a graphite foil. In this case, the graphite foil may include a body portion coated with the activated carbon (*see* the slashed portion in Fig. 3), and protrusion portions 111a and 113a which are protruded from the main portion but are not coated with the activated carbon. Here, the protrusion portions 111a and 113a form electrode taps of the electrodes 111 and 113. The filter part 110 may be operated by supplying power (or voltage or current) to the electrodes 111 and 113 through the electrode tabs 111a and 113a.

Next, a filter case part 130 will be described. As illustrated in Fig. 2, the filter case part 130 accommodates the filter part 110. More specifically, an opening 132 is formed at the top of the filter case part 130, and the filter case part includes a lower case 131 in which the filter part 110 is accommodated and an upper case 136 sealing the opening 132 of the lower case 131. In other words, the filter part 110 is inserted into the inside of the lower case 131 through the opening 132 of the lower case 131, and then the opening 132 of the lower case 131 is sealed with the upper case 136. Here, the lower case 131 has an inlet 133 on its side into which raw water enters, and the upper case 136 has an outlet 137 on its top from which purified water exits. In this case, the outlet 137 is formed to correspond to an outlet hole 115 of the filter part 110.

According to the structure above, raw water is purified by the following process: First, raw water is supplied to the inside of the filter case part 130 through the inlet 133. Next, by the pressure resulting from this supplying, the raw water enters into the inside of the filter part 110 through the side surface of the filter part 110. The raw water then flows between the anode 111 and cathode 113 inside the filter part 110 to be purified according to the CDI method. Then, the raw water (that is, purified water) is discharged to the outside of the electrode part 110 through an outlet hole 115. Then, the raw water is discharged to the outside of the filter case part 130 through the outlet 137.

Next, a terminal part 150 will be described. The terminal part 150 is electrically connected to the electrode taps 111a and 113a to supply power from external power (not illustrated) to the electrodes 111 and 113. More specifically, as illustrated in Figs. 2 and 3, the terminal part 150 includes a conductive electrode terminal 151 contacting with the electrodes taps 111a and 113a at one end. When supplying power to the other end of the electrode terminal with the electrodes taps contacting with one end of the electrode end, power may be supplied to the electrode taps through the electrode terminal.

It is preferable that the electrode terminal 151 is made of stainless steel. This also applies to a terminal band 152 which will be described later. This is because stainless steel is inexpensive and has good electrical conductivity. However, stainless steel has a limitation that the stainless steel becomes oxidized according to the current flow and thus rust may occur. In order to solve this limitation, it may be considered to form the electrode terminal 151 with titanium (Ti). However, since titanium may be oxidized according to the current flow, electrical conductivity may be weakened.

Accordingly, it is most preferable to form the electrode terminal 151 with platinum (Pt). This also applies to the terminal band 152 which will be described later. This is because platinum does not have problems that platinum is oxidized and thus rust occurs, or electrical conductivity is weakened. Meanwhile, considering that platinum is expensive, it may be considered to form the electrode terminal 151 by coating platinum on the surface.

However, the terminal part 150 may include a conductive terminal band 152 enclosing the electrode tap 111a or 113a along with the electrode terminal 151. In this case, it is preferable that the terminal band 152 encloses the electrode taps 111a and 113a along with the electrode terminal 151 so that the electrode taps 111a and 113a could be compressed inwardly. In addition, it is preferable that the terminal band 152 encloses the electrode taps 111a and 113a at least one round along with the electrode terminal 151 from the outside of the electrode taps 111a and 113a.

### [Sterilization unit]

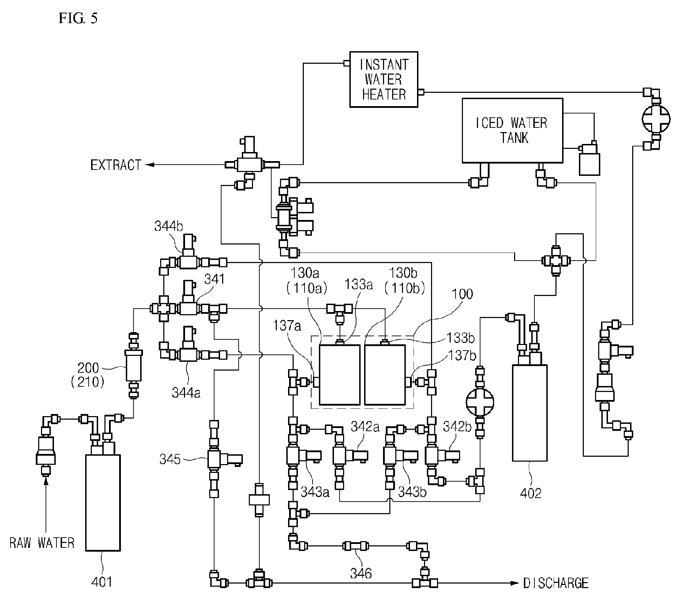

A sterilization unit 200 (*see* Fig. 5) plays a role of generating a sterilization substance from raw water to supply the sterilization substance to the filter part 110 in order to sterilize the filter part 110. In order to generate the sterilization substance, the sterilization unit 200 may reduce chlorine ion (Cl⁻) in raw water to chlorine (Cl₂). In order to reduce the chlorine ion to chlorine, the sterilization unit 200 may include a sterilization terminal part (not illustrated) coated with ruthenium (Ru) or ruthenium oxide (RuOx), and a sterilization case part 210 accommodating the sterilization terminal part. A description thereof will be further described below.

When power (or current or voltage) is applied to the sterilization terminal part, chlorine ion in raw water may be reduced to chlorine by ruthenium or ruthenium oxide of the sterilization terminal part. Raw water generally includes chlorine ion by itself. Ruthenium serves as a catalyst decreasing potential difference when reducing chlorine ion to chlorine. The chlorine thus generated may melt right away in raw water and could be hypochlorous acid (HOCl). HOCl is a sterilization substance capable of sterilizing bacteria and is a mixed oxidant. This sterilization unit 200 reduces chlorine ion in raw water to generate the sterilization substance. Here, platinum or iridium of platinum group may be used instead of ruthenium, but ruthenium is most effective.

Accordingly, the device for treating water according to the present embodiment may sterilize the filter part 110 without the need to further supply a chemical substance as the sterilization substance. Additionally, the device for treating water according to the present embodiment prevents in advance problems which occur due to bacteria through the sterilization so that the device may be semi-permanently used.

The sterilization terminal part may be prepared as below. First, ruthenium is coated on a metal terminal such as the electrode terminal 151. Next, the metal terminal is heated at a high temperature. By means of the heating, ruthenium may be oxidized to ruthenium oxide. Accordingly, ruthenium oxide mostly exists on the surface of the metal terminal.

However, as illustrated in Fig. 5 which will be mentioned later, the sterilization unit 200 may be prepared at the front end of the filter unit 100. Accordingly, when operating the sterilization unit 200, raw water including the sterilization substance may be supplied to the filter part 110, and when stopping the sterilization unit 200, raw water which does not include the sterilization substance may be supplied to the filter part 110. As such, when operating the sterilization unit 200 selectively, a lifespan of the sterilization terminal part may be extended.

Meanwhile, the device for treating water according to the present embodiment may be in a water-purifying mode, a regeneration mode and a sterilization mode. The water-purifying mode is a mode which purifies raw water from the filter part 110 to generate purified water, the regeneration mode is a mode which regenerates electrodes 111 and 113 from the filter part 110 to generate regeneration water, and the sterilization mode is a mode which sterilizes bacteria from the filter part 110 through the sterilization unit 200. For reference, the raw water is supplied to the filter part 110 even in the water-purifying mode for purification, and the raw water is supplied to the filter part 110 even in the regeneration mode for regeneration.

However, it is preferable to operate the sterilization unit 200 during the sterilization mode. Inventors of the present invention found the fact that when the filter unit 100 is operated in the water-purifying mode or regeneration mode, and HOCl is supplied to the filter unit 100, iron oxide (FeOx) is generated and thus a rejection of total dissolved solids (TDS) of the filter unit 100 decreases. This is because the electrode is not properly regenerated due to iron oxide. Thus, it is preferable to perform the sterilization mode when both the water-purifying mode and regeneration mode are not performed.

### [Structure of device for treating water]

Fig. 5 is a schematic view schematically illustrating the device for treating water according to an embodiment of the present invention. As illustrated in Fig. 5, the device for treating water according to an embodiment of the present invention not only includes a filter unit 100, a sterilization unit 200, a control unit, but includes a valve unit (how to control the valve unit will be described later).

As illustrated in Fig. 5, the filter unit 100 includes two filter parts, that is, a first filter part 110a and a second filter part 110b. The filter parts 110a and 110b need to regenerate the electrode through the regeneration mode. However, when there is one filter part, purified water cannot be generated during the regeneration of the electrode. Thus, in order to generate purified water regardless of the regeneration of the electrode, it is preferable that the filter unit 100 includes two filter parts 110a and 110b.

### [Control of filter unit]

It is preferable that when any one of the first and second filter parts 110a and 110b is in the water-purifying mode, the other one is in the regeneration mode. As an example, it is preferable that when the first filter part 110a is in the water-purifying mode, the second filter part 110b is in the regeneration mode. More specially, when the user selects an extract part such as a cock in order to extract purified water, the control unit starts the water-purifying mode for any one of the first and second filter parts 110a and 110b and performs a control of starting the regeneration mode for the other one. When the user deselects the extract part, the control unit performs a control of finishing the water-purifying mode for the filter part, which is in the water-purifying mode. This control is advantageous for a direct receiving type purifier without a storage tank. For reference, the user may select the extract part by pressing the extract part such as the cock with hands, and deselect the extract part by taking the hands off the extract part.

Here, when the water-purifying mode is performed for a first time, the regeneration mode may be performed for a second time. For example, when the water-purifying mode is performed for 80 seconds, the regeneration mode may be performed for 70 seconds and then there may be 10 seconds of standby.

In the present embodiment, when the water-purifying mode is performed for a total of first time for any one of the filter parts, the control unit performs the regeneration mode for the filter part, which was in the water-purifying mode, and performs a control of performing the water-purifying mode for the other filter part. For example, when the first time is 80 seconds, and the user selects the extract part for 90 seconds, the first filter part 110a performs the water-purifying mode for 80 seconds, and then the first filter part 110a performs the regeneration mode. The second filter part 110b performs the water-purifying mode for 10 seconds. As such, when operating the filter part, purified water may be continuously provided to the user and the filter part may be continuously regenerated.

For reference, when the first time is shorter than the second time, it is difficult to supply purified water to the user from the end of water-purifying mode to the end of the regeneration mode. Thus, it is preferable that the first time is equal to or longer than the second time. In this case, when the first time is longer than the second time, the filter part where the regeneration mode is finished may standby until the water-purifying mode in the other filter part is finished.

Meanwhile, when a voltage of a first polarity is applied to the filter part in the water-purifying mode, the regeneration mode may have a first mode applying a voltage of a second polarity which is opposite to the first polarity to the filter part, and a second mode applying a voltage of the first polarity to the filter part after the first mode. For example, as illustrated in Fig. 6, when (+) voltage is applied to the upper electrode and (-) voltage is applied to the lower electrode in the water-purifying mode, as illustrated in Fig. 7, in the first mode, (-) voltage may be applied to the upper electrode and (+) voltage may be applied to the lower electrode, and in the second mode, (+) voltage may be applied to the upper electrode again, and (-) voltage may be applied to the lower electrode.

When the voltage is applied as in the first mode, since an ion may be well desorbed, the electrode may be well regenerated. Meanwhile, for example, when the water-purifying mode is performed without performing the second mode after performing the first mode in the first filter part 110a, there is a concern that regeneration water left in the first filter part 110a may be supplied to the user. The regeneration water includes a contaminant (an ion), and thus it should not be supplied to the user. Thus, it is preferable to discharge in advance regeneration water in the filter part through the second mode in the regeneration mode. Additionally, the second mode is substantially identical to the water-purifying mode. Thus, when the regeneration mode includes the second mode, purified water is left in the filter part after the regeneration mode is performed, which is more preferable.

Alternatively, the regeneration mode may include a third mode, along with the first mode, which does not apply the voltage to the filter part after the first mode. With the supply of raw water to the filter part alone without applying the voltage to the filter part like the third mode, regeneration water left in the filter part may be discharged. As another alternative, the regeneration mode may include all of the first mode, second mode and third mode. For example, when the water-purifying mode is performed for 80 seconds in the first filter part 110a and then the water-purifying mode is performed for 80 seconds in the second filter part 110b, the first mode is performed for 70 seconds in the first filter part 110a while the water-purifying mode is performed in the second filter part 110b, then the third mode may be performed for 5 seconds, and then the second mode may be performed for 5 seconds. For reference, it is necessary for the water-purifying mode and regeneration mode to supply raw water to the filter part for water-purification and regeneration.

Meanwhile, when the extract part is selected again after the water-purifying mode stops in the middle of the first time, the control unit performs again the water-purifying mode for the remaining time among the first time in the filter part, which was in the water-purifying mode, until the extract part is deselected. Also, the control unit may perform the control of performing again the regeneration mode for the remaining time among the second time in the filter part, which was in the regeneration mode.

For example, when both the first time and second time are 80 seconds, and the user deselects the extract part at 60 seconds, the water-purifying mode stops in the first filter part 110a and the regeneration mode also stops in the second filter part 110b. After that, when the user selects again the extract part, the water-purifying mode is performed again in the first filter part 110a for the remaining 20 seconds, and the regeneration mode is performed again in the second filter part 110b for the remaining 20 seconds. Of course, when the user deselects the extract part before the remaining 20 seconds, both the water-purifying mode and regeneration mode will stop. However, when the user still selects the extract part, the regeneration mode will be performed in the first filter part 110a for the next 80 seconds, and the water-purifying mode will be performed in the second filter part 110b. For example, when the water-purifying mode is performed for a total of first time before and after the stopping of the first filter part 110a, the regeneration mode is performed for the first filter part 110a.

Meanwhile, the control unit may determine the first time or the second time for at least one of the filter parts 110a and 110b on the basis of at least one water-purifying performance of the filter parts 110a and 110b. As an example, the control unit may reduce the first time which is the performance time of the water-purifying mode, or increase the second time which is the performance time of the regeneration mode for the filter part whose water-purifying performance of the filter parts 110a and 11b is decreased.

In the filter part by the CDI method, the contaminant is adsorbed to the electrode in the water-purifying mode, and the contaminant is desorbed from the electrode in the regeneration mode. Accordingly, when performing the water-purifying mode short, less contaminants could be absorbed to the electrode, and when performing the regeneration mode long, more contaminants could be desorbed from the electrode. In conclusion, it is preferable that the filter part with decreased water-purifying performance performs the water-purifying mode short, or performs the regeneration mode long so as to reduce the contaminants left in the electrode. This is because more contaminants could be adsorbed from raw water in the next regeneration mode. In other words, this is because the water-purifying performance of the filter part with decreased water-purifying performance could be improved.

The device for treating water according to the present embodiment may actively control the water-purifying performance to be mostly constant. This may be advantageously applied to the cases when the water-purifying performance of at least one of the filter parts 110a and 110b is reduced, when the device for treating water is installed in an area where TDS of raw water is higher than previously expected, and when the TDS of raw water is changed during the use of the device for treating water.

For example, when both the first time and second time are originally 80 seconds, the water-purifying mode may be performed for 60 seconds in the first filter 110a with decreased water-purifying performance, or the regeneration mode may be performed for 100 seconds. For reference, the first time represents the time that the water-purifying mode may be continuously performed in one filter part, and the second time represents the time that the regeneration mode may be continuously performed in one filter part. Thus, the first time and the second time may be differently provided in the first filter part and the second filter part.

In addition, it is preferable for the control unit to increase the second time in correspondence to the reduction of the first time for the filter part with decreased water-purifying performance, or reduce the first time in correspondence to the increase of the second time for the filter part with decreased water-purifying performance. This is because contaminants left in the electrode may be reduced more when the time for absorbing contaminants (i.e., the first time) is set to be longer than the time for desorbing contaminants (i.e., the second time). For example, when both the first time and second time are originally 80 seconds, and the first time is reduced to 60 seconds in the first filter part 110a with decreased water-purifying performance, the second time may be increased to 100 seconds in the first filter part 110a. Meanwhile, even if the first time is reduced by 20 seconds in the water-purifying mode, it is not necessary to increase the second time by 20 seconds in the regeneration mode. For example, when the first time is reduced by 20 seconds in the water-purifying mode, the second time may be increased by 10 seconds, followed by 10 seconds of standby in the regeneration mode.

Meanwhile, in the present embodiment, when the first filter part 110a is in the water-purifying mode, the second filter part 110b may be in the regeneration mode. Additionally, when the first filter part 110a is in the regeneration mode, the second filter part 110b may be in the water-purifying mode (of course, when the second time is shorter than the first time, the other filter part may perform a standby after finishing the regeneration mode until any one of the filter parts finishes the water-purifying mode). Thus, it is preferable for the control unit to increase the second time in correspondence to the reduction of the first time for the filter part with decreased water-purifying performance and reduce the second time for the other filter, or reduce the first time in correspondence to the increase of the second time for the filter part with decreased water-purifying performance and increase the first time for the other filter part.

For example, when both the first and second time are originally 80 seconds in the first filter part 110a and the second filter part 11b, and the first time is reduced to 60 seconds in the first filter part 110a with decreased water-purifying performance, the second time may be increased to 100 seconds in the first filter part 110a and the first time may be increased to 100 seconds in the second filter part 110b at the same time. In this case, the second time may be reduced to 60 seconds in the second filter part. As such, while the water-purifying mode is performed for 60 seconds in the first filter part 110a, the regeneration mode may be performed for 60 seconds in the second filter part 110b. Additionally, while the regeneration mode is performed for 100 seconds in the first filter part 110a, the regeneration mode may be performed for 100 seconds in the second filter part 110b. Accordingly, purified water may be continuously provided to the user regardless of the repetition of the water-purifying mode and regeneration mode.

For reference, for example, the first time may be reduced to 0 second in the first filter part 110a with decreased water-purifying performance. Then, the regeneration mode will be continuously performed in the first filter part 110a, and the water-purifying mode will be continuously performed in the second filter part 110b.

Meanwhile, the water-purifying performance of the filter part may be evaluated based on the TDS of purified water discharged by the filter part. When the TDS of purified water is high, this means that there are many contaminants in the purified water. Accordingly, when the TDS of purified water is high, this may mean that the water-purifying performance of the filter part is low. In order to evaluate the water-purifying performance of the filter part, an additional TDS sensor may be installed on the bottom of the filter part.

When a certain voltage is applied to the filter part (electrode) in the regeneration mode, the water-purifying performance of the filter part may be evaluated according to the strength of current flowing in the filter part in the water-purifying mode. When a certain voltage is applied to the filter part in the regeneration mode, the strength of current flowing in the filter part (electrode) may vary depending on the TDS of raw water. In other words, when the TDS of raw water is high, the current flowing in the electrode is high. When the TDS of raw water is low, the current flowing in the electrode is low. Thus, when the strength of current flowing in the filter part in the water-purifying mode is stronger than usual, it may be determined that the water-purifying performance of the filter part is decreased (unless the installation place is changed, the TDS of raw water will be mostly fixed). In conclusion, even if an additional TDS sensor is not installed, the water-purifying performance of the filter part may be evaluated based on the strength of current flowing in the filter part in the water-purifying mode.

Meanwhile, the control unit may determine the decrease in water-purifying performance of the filter part based on the water-purifying performance during the initial operation of the filter part. When the device for treat water is newly installed and starts its operation, the water-purifying performance of the filter part may be most excellent. Thus, when evaluating the water-purifying performance of the filter part based on the time when the device for treating water is newly installed and starts is operation, the water-purifying performance of the filter part may be maintained to be the best.

For example, when the device for treating water is newly installed and starts its operation, the water-purifying performance of the filter part may be evaluated by separately storing the TDS of purified water discharged by the filter part in a storage unit (not illustrated) and comparing the TDS of purified water with the TDS stored in the storage unit whenever the filter part discharges purified water. It may be determined that the water-purifying performance of the filter part is decreased based on this evaluation. As an example, when the TDS of purified water discharged by the filter part is higher than the TDS stored in the storage unit by more than a reference value, it may be determined that the water-purifying performance of the filter part is decreased. The water-purifying performance of the filter part may be evaluated whenever the filter part discharges purified water, and then the first time of the water-purifying mode or the second time of the regeneration mode may be actively determined based thereon. From this, it may be expected that the water-purifying performance improves and scale formation decreases (when many scales are formed in the filter part, the pressure drop may increase or the flow may decrease).

For reference, evaluation on the water-purifying performance may be conducted based on the strength of current flowing in the filter part as stated above. Additionally, the time of initial operation of the filter part may mean the time until a certain time passes after the device for treating water is newly installed. Or, the time of initial operation of the filter part may mean the time when the filter part starts its operation again after the filter part is newly replaced. Or, the time of initial operation of the filter part may mean the time optionally set by the user (or operator). In addition, the control unit may determine the decrease in water-purifying performance of the filter part based on the water-purifying performance input by the user (or operator).

However, the control unit may determine the first time or the second time so that the water-performance during the initial operation of the filter part could be recovered. For example, when it is determined that the water-purifying performance of the first filter part 110a is decreased, the first time may be reduced or the second time may be increased for the first filter part 110a until the TDS of purified water discharged from the first filter part 110a is lowered to be within a range of reference value compared to the TDS stored in the storage unit. Then, the water-purifying performance of the filter part may be maintained to be the best.

Meanwhile, the control unit may control the first time or the second time as stated above so that the water-purifying performance is decreased in any one of the filter parts, but it may also control the first time or the second time so that there is a difference in the water-purifying performance between one filter part and another filter part. More specifically, when the water-purifying performance of the first filter part 110a differs from the water-purifying performance of the second filter part 110b by more than a reference value, a control of reducing the first time or increasing the second time may be performed for the filter part with a relatively decreased water-purifying performance (here, the reference value may be properly selected as needed).

The first filter part 110a and the second filter part 110b do not purify raw water in the same manner. Thus, as the device for treating water is used, there may be a difference in water-purifying performance between the first filter part 110a and the second filter part 110b. As such, there is a concern that purified water of a different level may be provided to the user depending on which filter part purifies raw water.

Thus, when the water-purifying performance of the first filter part 110a differs from the water-purifying performance of the second filter part 110a by more than a reference value, it is preferable to perform a control of reducing the first time or increasing the second time for the filter part with a relatively decreased water-purifying performance. In this case, the water-purifying performance may be evaluated based on the TDS of purified water, or based on the strength of current, as stated above. Additionally, the control unit may determine the first time or the second time so that the water-performance during the initial operation of the filter part could be recovered.

### [Control of valves]

Hereinafter, the control of valves by the control unit will be described with reference to Fig. 5. First of all, the water-purifying mode will be explained. When the first filter part 110a is in the water-purifying mode, only the supply valve 341 and purge valve 342a are open. The rest of valves are closed. In case of such opening and closing, the raw water may be supplied to the user after being purified through the first filter part 110a. When the second filter part 110b is in the water-purifying mode, only the supply valve 341 and purge valve 342b are open. That is, this is the same as the case where the first filter part is in the water-purifying mode. In case of such opening and closing, the raw water may be supplied to the user after being purified through the second filter part 110b. In this case, for water purification, it is necessary for the control unit to supply power to the electrode terminal of the first filter part 110a or the electrode terminal of the second filter part 110b. However, it is not necessary to supply power to the sterilization terminal part in the water-purifying mode. This also applies to the regeneration mode which will be described later.

Next, the regeneration mode will be explained. When the first filter part 110a is in the regeneration mode, only the supply valve 341 and a discharge valve 343a are open. The rest will be closed. In case of such opening and closing, the raw water may be discharged to the outside through the first filter part 110a. When the second filter part 110b is in the regeneration mode, only the supply valve 341 and discharge valve 343b are open. That is, this is the same as the case where the first filter part is in the regeneration mode. In case of such opening and closing, the raw water may be discharged to the outside through the second filter part 110b. In this case, for the regeneration, it is necessary for the control unit to supply power to the electrode terminal of the first filter part 110a or the electrode terminal of the second filter part 110b.

In this case, the water-purifying mode and regeneration mode may be performed in a complex way. For example, when the first filter part 110a is in the water-purifying mode and the second filter part 110b is in the regeneration mode, only the supply valve 341, purge valve 342a and discharge valve 343b needs to be open.

Next, the back washing in the sterilization mode will be explained. When back-washing the first filter part 110a, only a washing valve 344a and a drain valve 345 are open. The rest will be closed. In case of such opening and closing, the raw water may enter into the first filter part 110a through the outlet 137a of the first filter case part 130a and be discharged to the outside through the inlet 133a of the first filter case part 130a (the direction that the raw water flows in back washing is opposite to the direction that the raw water flows in the water-purifying mode or in the regeneration mode. Thus, "back" is added to "washing").

When back-washing the second filter part 110b, only the washing valve 344b and drain valve 345 are open. That is, this is the same as the case where the first filter part 110a is back-washed. In case of such opening and closing, the raw water may enter into the second filter part 110b through the outlet 137b of the second filter case part 130b and then be drained to the outside through the inlet 133b of the second filter case part 130b. In this case, the control unit may supply power to the sterilization terminal part during the back washing for the sterilization of the first filter part 110a or the second filter part 110b.

Next, the reverse sterilization (second sterilization) in the sterilization mode will be explained. When reverse-sterilizing the first filter part 110a, only the washing valve 344a and drain valve 345 are open. The rest will be closed. In case of such opening and closing, the raw water may enter into the first filter part 110a through the outlet 137a of the first filter case part 130a, and then be discharged to the outside through the inlet 133a of the first filter case part 130a (the direction that the raw water flows in the reverse sterilization is opposite to the direction that the raw water flows in the water-purifying mode or in the regeneration mode. Thus, "reverse" is added to "sterilization").

When reverse-sterilizing the second filter part 110b, only the washing valve 344b and drain valve 345 are open. That is, this is the same as the case where the first filter part 110a is reversely sterilized. In case of such opening and closing, the raw water may enter into the second filter part 110b through the outlet 137b of the second filter case part 130b, and then be drained to the outside through the inlet 133b of the second filter case part 130b. In this case, it is necessary for the control unit to supply power to the sterilization terminal part during the reverse sterilization for the sterilization of the first filter part 110a or second filter part 110b.

Finally, the normal sterilization (first sterilization) in the sterilization mode will be explained. When normally sterilizing the first filter part 110a, only the supply valve 341 and discharge valve 343a are open. The rest will be closed. In case of such opening and closing, the raw material may enter into the first filter part 110a through the inlet 133a of the first filter case part 130a, and then be discharged to the outside through the outlet 137a of the first filter case part 130a (for comparison with the reverse sterilization, the first sterilization will be referred to as normal sterilization).

When normally sterilizing the second filter part 110b, only the supply valve 341 and discharge valve 343b are open. That is, this is the same as the case where the first filter part 110a is normally sterilized. In case of such opening and closing, the raw water may enter into the second filter part 110b through the inlet 133b of the second filter case part 130b and then be discharged to the outside through the outlet 137b of the second filter case part 130b.

In this case, it is necessary for the control unit to supply power to the sterilization terminal part during the normal sterilization for the sterilization of the first filter part 110a or the second filter part 110b. For reference, according to the flow of raw water, the normal sterilization is suitable for the sterilization at the inlet 133 in the filter part 110, and the reverse sterilization is suitable for the sterilization at the outlet 137 of the filter part 110.

However, it is preferable that the discharge flow (corresponding to a first flow where the raw water is supplied to the inlet during the normal sterilization) discharged to the outside during the normal sterilization or the discharge flow (corresponding to a second flow where the raw water is supplied to the outlet during the reverse sterilization) discharged to the outside during the reverse sterilization is smaller than the discharge flow (corresponding to a third flow where the raw water is supplied to the outlet during the back washing) discharged to the outside during the back washing.

This will be described in detail. In the filter part 110, a particulate material stays more in the inlet 133 than in the outlet 137. Thus, in order to remove the material, it is preferable to allow the raw water to strongly flow from the outlet 137 to the inlet 133 *(see* Fig. 4). Accordingly, considering that a basic role of the back washing is to remove the particulate material, it is preferable that the discharge flow during the back washing is high (it may be discharged with a maximum flow).

However, the amount of sterilization substance generated in the sterilization unit 200 is limited. Thus, as the flow increases, the concentration of sterilization substance reduces, and thereby a sterilization effect cannot help being reduced. Accordingly, considering that a basic role of the normal sterilization or reverse sterilization is to sterilize the filter part, it is preferable that the discharge flow in the normal sterilization or reverse sterilization is relatively low (a maximum flow of 30% is preferable). For reference, the discharge flow of the normal sterilization may be the same as the discharge flow of the reverse sterilization.

Meanwhile, when the filter unit 100 includes two filter parts 110a and 110b, the device for treating water according to the present embodiment may further include a valve for controlling flow 346 at the bottom of the discharge valve 343. Here, the valve for controlling flow 346 may control the amount of regeneration water discharged to the outside to control the rate between purified water and regeneration water.

As an example, when the first filter part 110a is in the water-purifying mode, and the second filter part 110b is in the regeneration mode, only the purge valve 342a and discharge valve 343b will be open. The rest will be closed. In this case, it is assumed that raw water is supplied to the filter unit 100 in an amount of 10. When the valve for controlling flow 346 is controlled so that regeneration water could be discharged from the second filter part 110b to the outside in an amount of 2, raw water will be supplied to the first filter part 110a in an amount of 8.

For reference, the device for treating water according to the present embodiment may further include another filter in addition to the filter unit 100. As an example, the device for treating water according to the present embodiment may further include a pre-carbon filter 401 for mainly removing chlorine substance, or a post-carbon filter 402 for mainly removing smell, as illustrated in Fig. 5.

## Claims

1. A device for treating water by a CDI method, the method comprises:
a filter unit including first and second filter parts having a water-purifying mode of discharging purified water by purifying raw water and a regeneration mode of regenerating an electrode according to the CDI method; and
a control unit for controlling the filter unit,
wherein if any one of the first and second filter parts performs the water-purifying mode for a first time, the other one performs the regeneration mode for a second time, and
the control unit determines the first time or the second time based on the water-purifying performance of at least one of the first and the second filter parts.

2. The device of claim 1, wherein the control unit evaluates the water-purifying performance of the filter part based on total dissolved solids (TDS) of the purified water discharged by the filter part in the water-purifying mode.

3. The device of claim 1, wherein the control unit evaluates the water-purifying performance of the filter part according to the strength of current flowing in the filter part in the water-purifying mode, when a certain voltage is applied to the filter part in the water-purifying mode.

4. The device of claim 1, wherein the control unit reduces the first time or increases the second time for the filter part with decreased water-purifying performance between the first and second filter parts.

5. The device of claim 4, wherein the control unit increases the second time in correspondence to the reduction of the first time for the filter part with decreased water-purifying performance, or reduces the first time in correspondence to the increase of the second time for the filter part with decreased water-purifying performance.

6. The device of claim 5, wherein the control unit increases the first time for the other filter part in correspondence to the reduction of the first time for the filter part with decreased water-purifying performance, or increases the first time for the other filter part in correspondence to the increase of the second time for the filter part with decreased water-purifying performance.

7. The device of claim 4, wherein the control unit determines the decrease in the water-purifying performance of the first and second filter parts based on the water-purifying performance at an initial operation of the first and second filter parts.

8. The device of claim 4, wherein the control unit determines the first time or the second time so that the water-purifying performance at an initial operation of the first and second filter parts is recovered.

9. The device of claim 1, wherein the control unit performs a control of reducing the first time or increasing the second time for the filter part with lower water-purifying performance, when the water-purifying performance of the first filter part differs from the water-purifying performance of the second filter part by more than a reference value.

10. The device of claim 9, wherein the control unit determines the first time or the second time so that the water-purifying performance at an initial operation of the first and second filter parts is recovered.

11. The device of claim 1, wherein when a voltage of a first polarity is applied to the filter part in the water-purifying mode, the regeneration mode has a first mode applying a voltage of a second polarity which is opposite to the first polarity to the filter part, and a second mode applying a voltage of the first polarity to the filter part after the first mode.

12. The device of claim 1, wherein when a voltage of a first polarity is applied to the filter part in the water-purifying mode, the regeneration mode has a first mode applying a voltage of a second polarity which is opposite to the first polarity to the filter part, and a third mode not applying a voltage to the filter part after the first mode.

13. The device of claim 1, wherein the control unit performs a control of starting the water-purifying mode and the regeneration mode when an extract part for extracting the purified water is selected, and finishing the water-purifying mode when the extract part is deselected.

14. The device of claim 13, wherein when the water-purifying mode is performed for the first time at any one of the filter parts, then the control unit performs a control of performing the regeneration mode at the any one of the filter parts, and the water-purifying mode at the other one.

15. The device of claim 14, wherein when the extract part is selected again after the water-purifying mode stops in the middle of the first time, the control unit performs a control of performing again the water-purifying mode for the remaining time among the first time at the filter part, which was in the water-purifying mode, until the extract part is deselected, and performs a control of performing again the regeneration mode for the remaining time among the second time at the filter part, which was in the regeneration mode.
